**Europäisches Patentamt**

**European Patent Office**

**Office européen des brevets**

(11) Veröffentlichungsnummer: **0 039 776**
**B1**

(12) **EUROPÄISCHE PATENTSCHRIFT**

(45) Veröffentlichungstag der Patentschrift:
**20.06.84**

(21) Anmeldenummer: **81102528.7**

(22) Anmeldetag: **03.04.81**

(51) Int. Cl.³: **B 65 G 15/42**

(54) **Endlos umlaufendes Förderband.**

(30) Priorität: **13.05.80 DE 3018224**

(43) Veröffentlichungstag der Anmeldung:
**18.11.81 Patentblatt 81/46**

(45) Bekanntmachung des Hinweises auf die Patenterteilung:
**20.06.84 Patentblatt 84/25**

(84) Benannte Vertragsstaaten:
**AT BE FR GB IT NL SE**

(56) Entgegenhaltungen:
**DE - A - 1 938 425**
**DE - B - 2 100 364**
**FR - A - 1 364 049**

(73) Patentinhaber: **Hartmann, Karl, Südstrasse 38,**
**D-4132 Kamp-Lintfort (DE)**

(72) Erfinder: **Hartmann, Karl, Südstrasse 38,**
**D-4132 Kamp-Lintfort (DE)**

## Beschreibung

Die Erfindung betrifft ein endlos umlaufendes flexibles Förderband mit einen kasten- oder muldenförmigen Förderquerschnitt begrenzenden Seitenwänden aus einem senkrecht auf der Bandoberfläche angeordneten gewellten Profil.

Solche Förderbänder sind zum Beispiel aus der FR-A-1364049 bekannt. Sie bestehen in der Regel aus glatten bandförmigen, als Zugträger dienenden Gurten, die auf zylindrischen Rollen ablaufen bzw. um zylindrische Trommeln umgelenkt werden. Beiderseits sind im Bereich der Kanten auf die tragende Oberfläche des Gurtes Seitenwände aus einem gewellten Profil aufgesetzt, die den Förderquerschnitt begrenzen und durch ihre Profilform ein Umlenken des Förderbandes in verschiedenen Förderebenen gestatten, wobei sich das sogenannte Wellkantenprofil in den Wellen dehnt oder streckt.

Im Rücklaufteil der bekannten Förderbänder erfolgt gewöhnlich das Abstützen des Bandes dadurch, dass die Kanten der gewellten Seitenwände kopfseitig auf Rollen ablaufen.

Die Ausbildung des Wellkantenprofils bestimmt wesentlich die Funktion und Einsetzbarkeit der Förderbänder, wobei bei der Wahl des Wellenkantenprofils eine Reihe von Kriterien zu beachten sind. Bekanntlich werden beim Umlenken der Förderbänder aus der Förderebene die Wellenberge und Wellentäler der Wellkante gestreckt oder gestaucht, wobei Streckung und Stauchung von der Bandoberfläche aus, also der Nähe der neutralen Umlenkzone zur kopfseitigen Kante des Wellkantenprofils hin zunehmen. Das bedeutet, dass der maximale Radius, um den das Förderband umgelenkt werden kann, abhängig ist von der Länge der maximalen Streckung des Wellenzuges im Kopfbereich in der einen Umlenkrichtung und der Zusammenstauchbarkeit der Welle in der anderen Umlenkrichtung. Dabei spielt die Höhe der Wellkante eine wichtige Rolle, weil die Profillänge, die beim Umlenken zu strecken ist, umso grösser ist, je höher die Wellkante ist.

Man könnte zwar theoretisch durch Vergrösserung der Wellenamplitude des Wellkantenprofils auf einem bestimmten Wellkantenabschnitt mehr streckbare Profillänge unterbringen, doch sind auch hier Grenzen gesetzt. Einerseits verringert eine grosse Wellenamplitude in unerwünschter Weise den nutzbaren Förderquerschnitt zwischen den beidseitigen Wellkanten, und andererseits verliert die Wellkante, insbesondere bei grosser Wellkantenhöhe, an Seitensteifigkeit, so dass sie dazu neigt, auszuknicken. Ausserdem kommt der weitere Nachteil hinzu, dass im Rücklauftrum des Förderbandes, wo die Köpfe der Seitenwand auf den Stützrollen ablaufen, bei grossen Amplituden schädliche Schwingungen entstehen, weil eine stabile Auflage bei diesen Profilabmessungen nicht zu erreichen ist. Die entstehenden Schwingungen können kaum oder nur mit unvertretbarem Aufwand vermieden werden; sie können zu schweren Schäden und sogar zur Zerstörung der Anlage führen.

Ein weiteres Kriterium für die Wahl des optimalen Wellkantenprofiles ergibt sich beim Umlenken des Förderbandes nach innen, z. B. zum Fördern des Schüttgutes im Innenkreis. In diesem Fall wird das Profil der Wellkante gestaucht, wobei die Stauchung nur soweit erfolgen kann, bis die gestauchten Flanken der den Wellenbergen und -tälern benachbarten Bereiche des Profils aneinanderliegen. Insofern ist durch die Stauchung, ebenso wie bei der vorhergehend beschriebenen Streckung im anderen Umlenksinne, der Umlenkradius des Förderbandes durch die Wellkantengeometrie vorgegeben.

Schliesslich ist als anderes wichtiges Kriterium bei der Auswahl des richtigen Wellenkantenprofils das Verhalten des Förderbandes in Abwurfbereich des Transportgutes zu beachten. Diese Verhalten im Abwurfbereich ist wesentlich von der Wellenform der Wellkante abhängig und beeinflusst die Fördergeschwindigkeit des Förderbandes direkt.

Tiefe Einbuchtungen in den Wellentälern führen zum Festsetzen des Transportgutes, insbesondere, wenn es sich um klebrig adhäsive Materialien handelt. Bei hohen anzustrebenden Fördergeschwindigkeiten, die die optimale Förderleistung voraussetzt, führt das dazu, dass an der Abwurfstelle das Band nicht vollständing entleert wird, sondern sich das Transportgut hinter der Abwurfstelle im Bereich des Untertrums verstreut.

Es ist zwar versucht worden, durch wenigstens teilweises Ausfüllen der Wellentäler das Festsetzen von Gut zu verhindern, doch bedeutet dies entsprechend hohen Materialeinsatz, verbunden mit sich erhöhendem Bandgewicht. Wollte man dies vermeiden, so war man gezwungen, das Förderband unter Verzicht auf Förderleistung entsprechend langsamer laufen zu lassen.

Ausgehend von diesen Problemen und Erkenntnissen, besteht die Aufgabe der Erfindung darin, eine Wellkantengeometrie für ein Förderband der im Oberbegriff des Hauptanspruches beschriebenen Art zu schaffen, die, insbesondere bei kleinen bis mittleren Seitenwandhöhen (etwa von 40 bis 120 mm Kantenhöhe), ein optimales Abwurfverhalten bei guter Selbstreinigung und Stauchfähigkeit im Umlenkbereich bei ausreichender Seitenstabilität gestattet und mit geringem Materialeinsatz gute Laufeigenschaften des Bandes, auch im Rücklauftrum hat.

Zur Lösung der Aufgabe wird erfindungsgemäss vorgeschlagen, dass die Wellen der Seitenwände in jeder parallel zur Bandoberfläche gedachten Schnittebene sägezahnartig mit abwechselnd steilen und flachen Flanken verlaufen. Durch dieses vorgeschlagene Wellkantenprofil ergibt sich ein besonders günstiges Stauchverhalten der Welle bei grosser Seitenstabilität durch die unterschiedlichen Flankenwinkel der Welle, die in gestauchtem Zustand ein Hintereinanderschieben der Wände gestatten.

Besonders vorteilhaft ist es, wenn nach einem anderen Merkmal der Erfindung vorgeschlagen wird, dass die inneren Seitenwände der durch die steileren Flanken der Welle gebildeten Seitenwandabschnitte senkrecht zur Förderrichtung bzw. um etwa 5 Grad aus der Senkrechten in Förderrichtung zur Bandlängsachse hingeschwenkt angeordnet sind. Dieser Vorschlag geht von der Erkenntnis aus, dass durch die Fördergeschwindigkeit des Bandes das Transportgut, in der Regel Schüttgut, infolge seines Beharrungsvermögens bestrebt ist, sich auch im Abwurfbereich des Bandes in bisheriger Richtung weiterzubewegen. Die als Mitnehmer für das Gut fungierenden Flanken der herkömmlichen Wellen, die im Abwurfbereich aus der Förderebene ausgelenkt werden, schleudern jedoch das sich in diesem Bereich befindliche Gut gegen die gegenüberliegende Flanke der in Förderrichtung voreilenden Welle, die somit den Abwurf behindert. Das führt zum verstärkten Verstreuen des Fördergutes im Abwurfbereich. Die erfindungsgemäss vorgeschlagene sägezahnartig ausgebildete Welle schliesst das in vorteilhafter Weise aus, indem die voreilende Wellenflanke flacher ausgebildet ist und dadurch den Abwurf nicht behindert.

Durch die sägezahnartige Ausbildung des Wellenprofils mit der vorgeschlagenen Anordnung der Wellenflanken wird jedoch nicht nur das Selbstreinigungsverhalten der Welle erheblich verbessert, sondern auch die Seitenstabilität. Durch die nahezu rechtwinklige Anordnung der steilen Wellenflanke wird eine Seitenstabilität erreicht, wie sie von der Sinuswelle her bekannt ist, jedoch ohne dass besonders tiefe Einbuchtungen des Wellentales vorhanden sind, in denen das Gut sich festsetzen kann.

Beim Umlenken des Förderbandes nach innen hat sich gezeigt, dass die Wellengeometrie der Erfindung besonders gute Stauchung gestattet, d. h. die Flanken legen sich platzsparend gleichmässig aneinander, ohne zum Ausknicken zu neigen.

Vorzugsweise wird zwischen den flachen und steilen Flanken der Welle jeweils ein Winkel zwischen 20 und 35 Grad gebildet. Es hat sich gezeigt, dass in diesem Winkelbereich besonders günstige Ergebnisse hinsichtlich Stauchfähigkeit, Seitenstabilität und Abwurfverhalten erzielbar sind.

Ein Ausführungsbeispiel der erfindungsgemässen Wellkante ist in der Zeichnung dargestellt und wird nachfolgend beschrieben. Es zeigt.

Fig. 1 einen Abschnitt einer Seitenwand des Förderbandes teilweise im Normalzustand und teilweise im gestauchten Zustand und

Fig 2 und 3 je einen Abschnitt der Seitenwand des Förderbandes im normalen bzw. gestreckten Zustand.

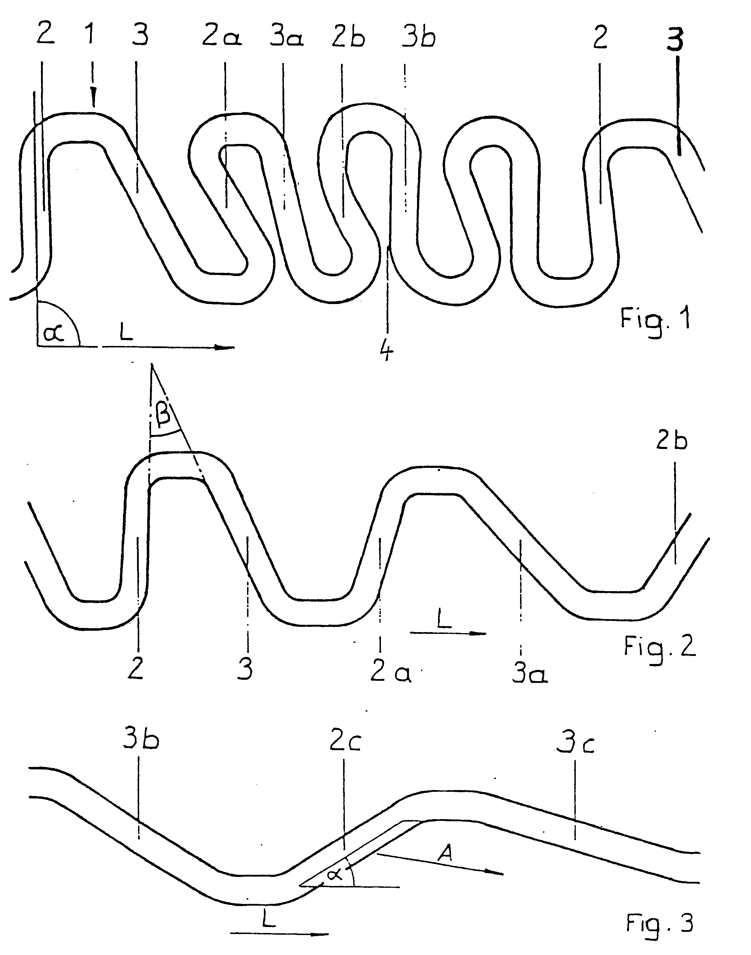

In Fig. 1 bis 3 ist je ein Abschnitt einer Seitenwand des Förderbandes dargestellt, dessen Laufrichtung durch den mit L bezeichneten Pfeil angegeben ist. Im dargestellten Ausführungsbeispiel soll der Förderquerschnitt jeweils unterhalb der gezeichneten Seitenwandabschnitte liegen, so dass jeweils die — in Förderrichtung gesehen — linke Seitenwand gezeichnet ist.

Eine Welle der Seitenwand ist in Fig. 1 an der linken Seite im Normalzustand, also ungestaucht und ungestreckt dargestellt und mit 1 bezeichnet. Die Welle besteht aus den Flanken 2 und 3, wobei die Flanke 2 zur Förderbandlaufrichtung L in einem nahezu rechten Winkel verläuft. Die Flanke 3 der Welle 1 verläuft schon im Normalzustand wesentlich flacher, wie aus der Zeichnung ersichtlich ist.

In der Mitte des in Fig. 1 dargestellten Seitenwandabschnittes ist der gestauchte Zustand der Wellen 1 gezeichnet. Dieser Zustand ergibt sich bei der Umlenkung des Förderbandes im Innenkreis, also aus der Förderebene heraus nach oben. Wie erkennbar, neigt sich die steile Flanke 2a entgegen der Laufrichtung L des Förderbandes nach hinten, die flache Flanke 3 richtet sich zu einer steileren Lage auf, und zwar in eine Lage, wie sie bei den Positionen 2b und 3b für die beiden Flanken angegeben ist. In dieser Lage liegen die Flanken 4 der gestauchten Wellenabschnitte im Extremfall aneinander, wobei die Wellen 1 sich leicht nach hinten neigen, so dass ein raumsparendes Hintereinanderfalten der Wellen 1 eintritt. Durch die steile Lage der Flanke 3b im gestauchten Zustand der Welle verbleibt auch in dieser Lage eine sehr gute Seitenstabilität der Förderband-Seitenwand, d. h. der Neigung der gewellten Seitenwand zum Ausknicken wird entgegengewirkt.

In der rechten Hälfte der Fig. 1 wird der anschliessende Streckungsvorgang der zuvor gestauchten Welle 1 verdeutlicht, die nach Beendigung der Stauchung wieder die normale Form einnimmt, wie sie äusserst rechts in Fig. 1 dargestellt ist. Die Flanke 2 schliesst mit der Förderbandlaufrichtung L nach Abschluss des Stauchungsvorganges wieder den in Fig. 1 eingezeichneten Winkel $\alpha$.

In Fig. 2 ist wieder ein Abschnitt der Förderband-Seitenwand dargestellt, diesmal jedoch in der Phase beginnender Streckung. Solche Streckung tritt ein, wenn das Förderband um eine an der Unterseite des Bandes angeordnete Umlenkrolle aus der Förderebene heraus abgelenkt oder umgelenkt wird. In Fig. 2 sind wieder die steile Flanke und die flache Flanke der Welle 1 im Normalzustand mit 2 und 3 bezeichnet. Die beiden Flanken 2 und 3 schliessen miteinander einen Winkel $\beta$, der zwischen 20 und 35 Grad liegt. Die zunächst nahezu rechtwinklig zur Laufrichtung L des Bandes stehende Flanke 2a neigt sich bei der Streckung des Seitenwandabschnittes (Mitte Fig. 2) in Laufrichtung L des Förderbandes nach vor, während der Winkel der flachen Flanke 3a weiter abflacht, also der Winkel $\beta$ sich vergrössert.

Die maximale Streckung des Seitenwandabschnittes ist in Fig. 3 dargestellt, die die Fortsetzung der in Fig. 2 rechte Seite abgebrochenen Darstellung des Streckungsvorganges zeigt. Bei 2c hat die steile Flanke 2 einen stark nach vor geneigten flachen Winkel zur Laufrichtung L eingenommen, d. h. der Winkel $\alpha$ hat sich stark verkleinert. Die flache Flanke 3c hat einen noch flacheren Winkel eingenommen, wobei sich der Winkel $\beta$ zwischen den Flanken 2c und 3c wesentlich vergrössert hat. Wenn davon ausgegangen wird, dass bei Umlenkung des Förderbandes in die Gegenrichtung der Abwurf des Fördergutes dort beginnt, wo die Streckung der Seitenwand einsetzt, so lässt sich aus der Zeichnung bereits erkennen, dass die in Abwurfrichtung A voreilenden Flanken 3a, 3b bzw. 3c durch ihre flachere Neigung den Abwurf weniger behindern, als es die Flanke einer Welle tun würde, die nicht in der erfindungsgemässen Weise sägezahnartig geneigt ausgebildet ist. Hingegen bewirken die trotz der Streckung steileren Flanken 2a, 2b bzw. 2c eine ausreichende Mitnahme des Gutes und einen guten Abwurf, der im Zusammenhang mit den beiden erfindungsgemässen Flankenneigungen wesentlich günstiger ist als beim Stand der Technik.

Die erfinderischen Zusammenhänge bei der vorgeschlagenen Seitenwandausbildung im Zusammenhang mit dem günstigen Abwurfverhalten gestatten die Erstellung von Förderbändern mit schmalen Förderquerschnitten, weil gerade bei diesen Bändern
mit schmaler Nutzbreite bisher das Abwurfverhalten
sehr ungünstig war, weil die Flanken der Förderbandseitenwände den Abwurf behinderten.

**Patentansprüche**

1. Endlos umlaufendes flexibles Förderband mit
einen kasten- oder muldenförmigen Förderquerschnitt
begrenzenden Seitenwänden aus einem senkrecht
auf der Bandoberfläche angeordneten gewellten Profil, dadurch gekennzeichnet, dass die Wellen (1) der
Seitenwände in jeder parallel zur Bandoberfläche gedachten Schnittebene sägezahnartig mit abwechselnd steilen (2) und flacheren (3) Flanken verlaufen.

2. Endlos umlaufendes flexibles Förderband nach
Anspruch 1, dadurch gekennzeichnet, dass die inneren Seiten der durch die steileren Flanken (2) der Welle (1) gebildeten Seitenwandabschnitte senkrecht
zur Förderrichtung bzw, um etwa 5 Grad aus der
Senkrechten in Förderrichtung zur Bandlängsachse
hin geschwenkt angeordnet sind.

3. Endlos umlaufendes flexibles Förderband nach
Anspruch 1 und 2, dadurch gekennzeichnet, dass
zwischen den flachen (3) und steilen (2) Flanken der
Welle jeweils ein Winkel zwischen 20 und 35 Grad
gebildet wird.

**Claims**

1. An endless conveyor belt comprising of an elongated flexible bottom wall; and a pair of flexible
upright longitudinally extending side walls extending
upwardly from said bottom wall at opposite lateral
sides thereof, forming a box or a trough like cross-
section adapted to accomodate material to be conveyed, said side walls having respective series of
longitudinally consecutive upright corrugations each
provided with two mutually inclined flanks one of
which is inclined with reference to the elongation of
said bottom wall at a greater angle than the other
flank forming a saw tooth like corrugation.

2. A conveyor belt as defined in claim (1) each of
said corrugations having an inner side facing towards the respective other side wall, and wherein
the inner sides of said one flanks are located in
upright planes which are forwardly inclined in the direction of belt travel at angles of substantially 5 degrees relative to the elongation of said bottom wall.

3. A conveyor belt as defined in claim (1) and (2)
wherein said one and said other flank of each corrugation include with each other an angle of between
substantially 20 and 35 degrees.

**Revendications**

1. Bande de transport flexible circulant sans fin
comportant des parois latérales délimitant une section transversale de transport en forme de caisson ou
de creux, présentant un profil ondulé prévu verticalement sur la surface de la bande de transport, caractérisée en ce que l'ondulation (1) des parois latérales présente, dans tout plan de coupe imaginable
parallèle à la surface de la bande de transport, alternativement des flancs raides (2) et moins raides (3).

2. Bande de transport flexible circulant sans fin selon la revendication 1, caractérisée en ce que les côtés intérieurs des parties de paroi formées par les
flancs plus raides (2) de l'ondulation (1) sont prévus
perpendiculairement au sens de transport ou inclinés
d'environ 5 degrés par rapport à la verticale du sens
de transport vers l'axe longitudinal de la bande.

3. Bande de transport flexible circulant sans fin selon les revendications 1 et 2, caractérisée en ce
qu'un angle compris entre 20 et 35 degrés est formé
à chaque fois entre le flanc (3) moins raide et le flanc
(2) raide de l'ondulation (1).

Fig. 1

Fig. 2

Fig. 3